# EUROPEAN PATENT SPECIFICATION

(11) **EP 4 563 207 B1**
(45) Date of publication and mention of the grant of the patent: **08.07.2026**
(21) Application number: 24215688.3
(22) Date of filing: 27.11.2024
(51) Int. Cl.: B01D 1/16

(54) **DEVICE FOR DISTRIBUTING PROCESS GAS IN SPRAY DRYERS**
VORRICHTUNG ZUR VERTEILUNG VON PROZESSGAS IN SPRÜHTROCKNUNGSANLAGEN
DISPOSITIF DE DISTRIBUTION DE GAZ DE PROCESSUS DANS DES SÉCHOIRS À PULVÉRISATION

(30) Priority: 29.11.2023 IT 202300025437
(43) Date of publication of application: 04.06.2025
(73) Proprietor: APTSOL S.r.l., 28100 Novara (IT)
(72) Inventor: FOGLIO BONDA, Andrea, 28100 Novara (IT)
(74) Representative: Raimondi, Margherita

(56) References cited:
- CN-A- 106 461 326
- US-A- 5 032 222
- US-B2- 8 533 972

## Description

The present invention relates to a disassemblable distributor for distributing a process gas flow in a spray dryer and a spray dryer equipped with the flow distributor.

The invention is applicable in particular for the uniform distribution of the process gas in small-size spray dryers in which droplets of a fluid (slurry) are brough into contact with a heated gas, causing the evaporation of the solvent and the formation of solid particles. An example of such a process is the so-called spray drying technique and the apparatus used for this technique are called "spray dryers".

It is known that, in a spray dryer, an air distribution unit is used to introduce drying air (process gas) into the drying chamber (usually cylindrical in shape) where the droplets of the fluid to be dried and the heated drying gas interact. It is also known that a uniform distribution of the droplets to be dried and of the drying gas allows a high drying efficiency to be achieved. A homogeneous and non-turbulent gas flow prevents moreover the stagnation or backflow of particles which would result in rapid deterioration of the material and soiling of the process line.

The purpose of the air distributor unit is to allow an optimum distribution of the circulating flow of drying gas; in order to ensure an adequate downwards flow of drying air inside the drying chamber, the distributor is usually mounted on the cover of the drying chamber so as to collect an incoming flow of process gas (usually supplied tangentially) and distribute it axially from the centre of the cover of the drying chamber (usually via a circular hole) towards the bottom thereof. Generally speaking, the drying gas distributor unit is an assembly designed to be supplied with a drying gas and to distribute it into a drying chamber of a spray dryer.

A person skilled in the art will know that heated air is often used as drying gas when the liquid to be atomized is an aqueous solution, whereas it is more likely that an inert gas will be used when the liquid to be atomized is a non-aqueous solution. The term "drying gas" therefore includes all types of gaseous process fluids which may be used in the spray drying process. Moreover, the term "spray dryer" should be interpreted as embracing any process for conditioning a liquid in the form of atomized droplets by means of a process gas, including drying and cooling.

Generally a modern spray dryer system may comprise a drying tower comprising a drying chamber closed at the top by a cover. The cover has installed therein, generally in a central/coaxial position of the drying chamber, a nozzle unit, for example inserted into a through-hole of the cylindrical or frustoconical shaped cover. The nozzle unit includes one or more nozzles which are arranged to dispense the droplets of fluid to be dried inside the drying chamber; the nozzles are in particular atomizer nozzles designed to convert the liquid to be dried into fine droplets and may, for example, be two-fluid nozzles, rotating nozzles or pressure nozzles.

The cover of the drying chamber also has formed in it a distributor unit for distributing the drying gas, comprising a distribution compartment with a generally hollow cylindrical or spiral duct form, into which the drying air enters via an inlet mouth in a direction tangential to the distribution compartment and is forced to exit in a coaxial vertical direction through a gas outlet opening which allows communication between the distribution compartment and the drying chamber. The outlet opening is generally arranged coaxially around the one or more nozzles of the nozzle unit, therefore allowing the process gas to ensure into the drying chamber precisely in the area where atomization of the fluid occurs. The outlet opening is generally circular and is supplied via the inside bottom surface of the distribution compartment which is preferably shaped as a frustoconical bottom funnel which also acts as an additional conveyor for supplying the gas flow to the outlet opening leading into the drying chamber. Solutions for inserting an air distribution device inside a distribution compartment are known, for example, from US 4,227,896 (Niro), which describes a gas distribution device comprising two sets of vanes positioned opposite each other so as to obtain a greater uniformity of the downwardly directed flow of the drying air. However, this solution is unable to straighten effectively the gas flow which, entering tangentially, moves with a circular/spiral-like movement inside the distribution compartment, so as to output a downwards axial vertical flow. Moreover, it does not remove the turbulent vortices which form along the flow axis.

By way of an alternative solution, in FR 1,289,817 perforated plates are used in order to avoid turbulence in the air flow and therefore obtain a more uniform distribution of the air. However, the use of these perforated plates has proved to be problematic in view of the difficulties of keeping the plates clean.

According to a further solution, known from US 2009008805 A1, metal panels are positioned inside the distribution compartment and welded or screwed onto the walls of the distribution compartment. This system, while effectively deviating the rotational movement into an axial vertical movement, has not proved to be effective in directing and suitably stabilizing the turbulent movements.

Furthermore, these air deviators are mechanically integral with the rest of the dyer body and in any case are composed of many welded or bolted components, thus complicating any assembly or disassembly operations which many be needed for maintenance, inspection or cleaning purposes. This aspect is even more significant in the case of small-size apparatus where the spray-ball washing systems are not feasible. Likewise difficult or impossible are any operations for changing the flow configuration depending on variations in the process parameters.

Further examples of deviators according to the preamble of Claim 1 are described in CN-106401326, US2017/0971180 and US 2013/015264.

The technical problem which is posed therefore is that of providing a device for distributing the process gas of a spray dryer which solves or at least partially overcomes one or more of the said problems of the prior art. A particular aim of the present invention is to provide a distributor for the process gas of a spray dryer which is easy and low-cost to produce, assemble, maintain and replace. A further aim of the present invention is to provide a process gas distributor for a spray dryer which is able to stabilize the flows both radially and axially.

A further particular aim of the present invention is to provide a spray dryer which moreover is easy and low-cost to produce, assemble, maintain and replace.

These results are obtained according to the present invention by a process gas distributor according to Claim 1.

Further details may be obtained from the following description of non-limiting examples of embodiment of the subject of the present invention, provided with reference to the accompanying drawings, in which:
Figure 1: is a schematic perspective view of the top part of a spray dryer not part of the present invention, with the cover disassembled;
Figure 2: is a transparent perspective view from the opposite side of the dryer according to Fig. 1, with the air distributor supported on the bottom of the distribution compartment of the cover;
Figure 3: is a schematic diagonal perspective view of a first example of embodiment of an air distributor not part of the present invention, in the assembled condition;
Figure 4: is a diagonal perspective view of a containment ring of the air distributor not part of to the present invention;
Figure 5: is a side view of a deviator vane of the self-supporting air distributor, not part of the present invention;
Figure 6: is a vertically sectioned view of the cover of the dryer according to

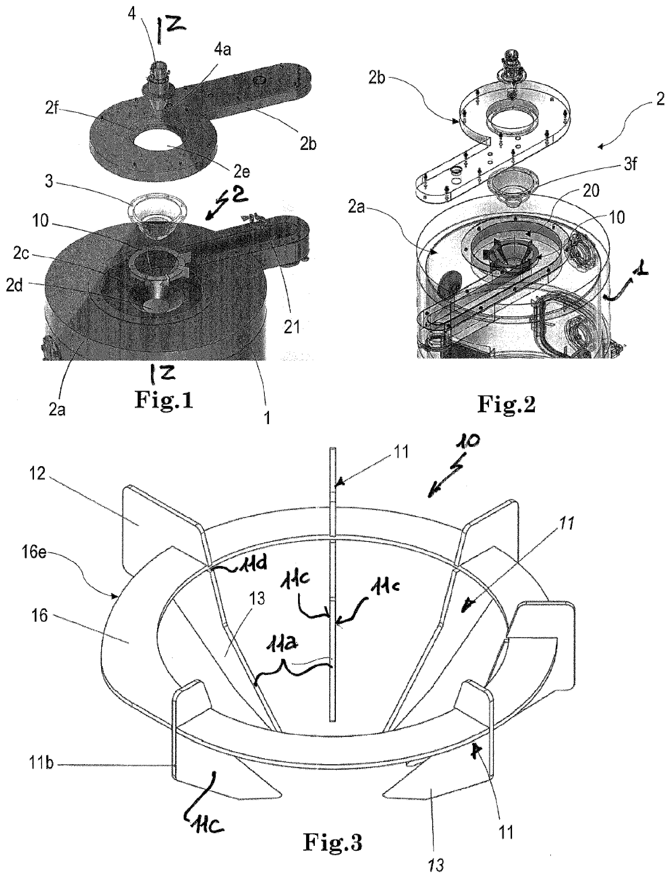

Figure 1, partly assembled, without the nozzle unit;

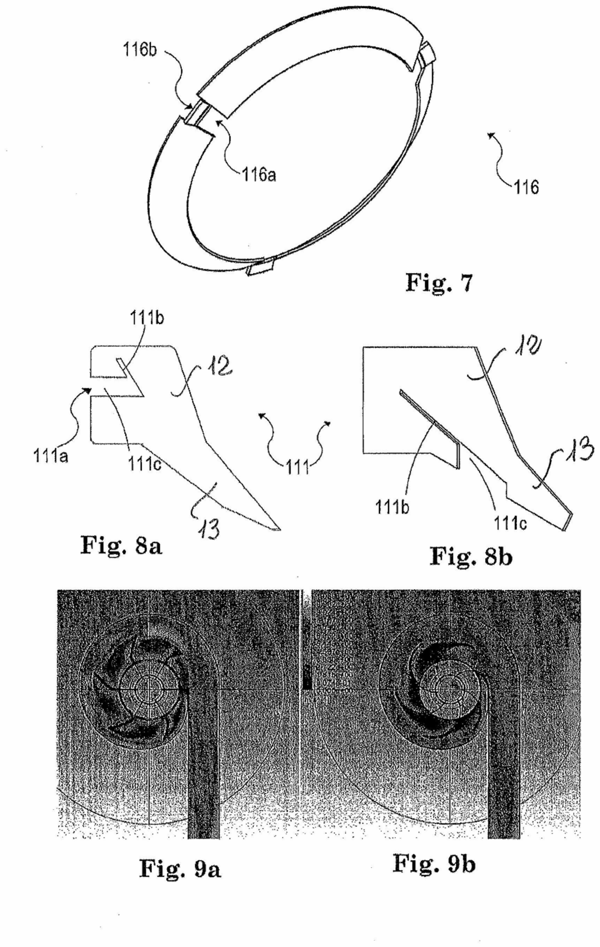

Figure 7: is a diagonal perspective view of a second example of a containment ring of the air distributor according to the present invention;
Figure 8a: is a side view of a second example of embodiment of a deviator vane of the distributor according to the present invention;
Figure 8b: is a side view of a second example of embodiment of a deviator vane of the distributor according to the present invention;
Figure 9a: is an illustration showing a CFD simulation of the distribution of the gas flow with a crown distributor having folded vanes according to the invention;
Figure 9b: is an illustration showing a CFD simulation of the distribution of the gas flow with a crown distributor having curved vanes according to the invention.

With reference to Figs. 1 and 2, an example of embodiment of a spray dryer (or drying tower) not part of the invention comprises a bottom drying chamber 1 with a vertical central axis Z-Z; the chamber 1 is preferably cylindrical.

The drying chamber 1 is closed at the top by an upper cover 2 designed to be fixed onto the chamber 1 in order to close the upper opening thereof. The upper cover 2 preferably comprises a bottom cover body 2a with an internal cavity and an upper cover-piece 2b, which are designed to be stably coupled together in order to define an internal volume 2c of the cover 2.

The cover 2 has an upper coaxial hole 2e in the cover-piece 2b which places the internal volume 2c in communication with the outside. The upper hole 2e has an inset annular seat 2f inside it.

The cover 2 also has a coaxial bottom hole 2d in the cover body 2a, which places the internal volume 2c at the bottom in communication with the drying chamber 1. The inner bottom surface of the internal volume 2c is formed as a coaxial funnel, preferably with a frustoconical shape.

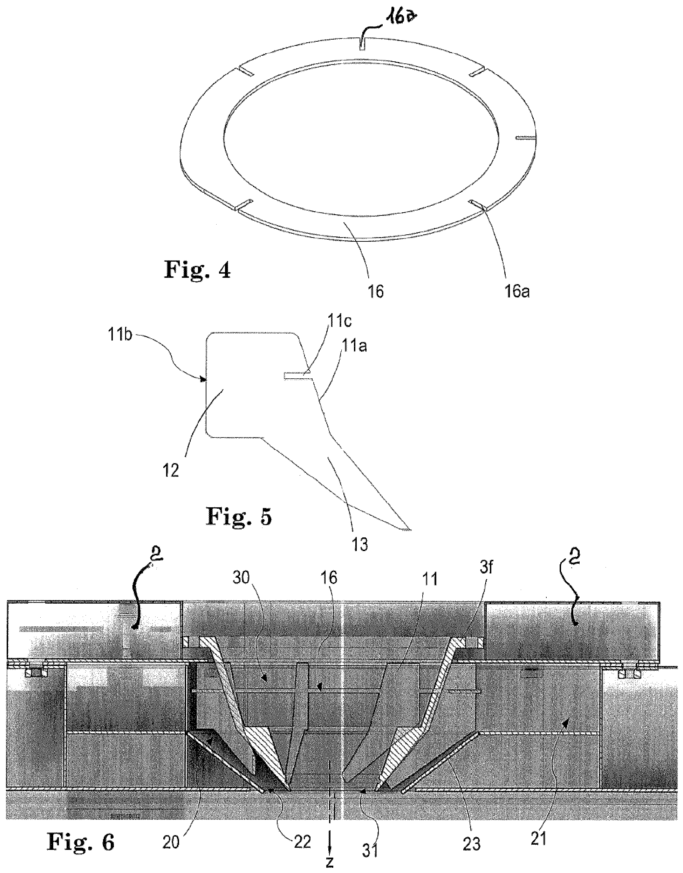

A partition 3 is designed to be coaxially housed inside the internal volume (Fig. 6). As shown in Figs. 1-2 and 6, the partition 3 is preferably in the form of a hollow frustoconical funnel designed to be inserted inside the upper hole 2e of the cover 2. An annular edge 3f of the partition 3 is designed to abut against the annular inset seat 2f of the cover for stable positioning of the partition 3 inside the cover 2. More generally, the partition 3 has a projecting annular edge designed to abut against an annular surface of the internal volume 2c of the cover for stable housing of the partition 3 inside the cover itself.

In preferred embodiments, the partition 3 acts as a support element for a nozzle unit 4 and in particular has an annular step on its inner surface designed to form a support surface for fixing the nozzle unit 4.

Once assembled (Fig. 6), the support 3 divides up the internal volume 2c into two concentric compartments, i.e. a first coaxial central compartment 30, designed to house the dispensing nozzle unit 4, and a second compartment 20 for distributing the drying gas.

The first central compartment 30 has a first coaxial, bottom, opening 31 for inserting one or more nozzles 4a of the nozzle unit 4 inside the drying chamber 1, so that the one or more nozzles 4a are arranged to dispense the fluid droplets inside the chamber 1, generally in a coaxial central position in the cover 2 of the chamber.

As mentioned above, the nozzle 4a may be an atomizer nozzle for the production of an aerosol.

The second compartment 20 is designed to distribute the drying gas flow and is configured to receive drying gas from an inlet opening through a tangential duct 21 and to channel it towards an outlet 22 for the drying gas, consisting of a second coaxial opening 22 which surrounds the first opening 31 from which the nozzle 4a protrudes 4a and is delimited by said partition 3 which carries the nozzle unit 4.

The distribution compartment 20 is generally a hollow cylindrical compartment or a spiral duct inside which the gas enters tangentially from the tangential duct 21 and moves in a circumferential direction or with a spiral-like movement towards the outlet 22 for the gas, which is generally forced under pressure to move along the side surface of the internal volume as far as the outlet 22 for the drying gas, through which it is input into the drying chamber 1 around the dispensing nozzles 4a.

The bottom surface 23 of the distribution compartment 20 is shaped as a coaxial, in particular frustoconical, funnel for conveying the gas flow towards the outlet opening.

Once the cover 2 has been assembled, a crown-shaped flow distributor 10 is coaxially housed inside the distribution compartment 20 and configured to deviate the drying gas flow between the inlet and the outlet for the drying gas of the distribution compartment.

With reference to Figs. 1-5, a first example of embodiment of a process gas distributor 10 not part of the present invention comprises a containment ring 10 which has a vertical axis, during use coaxial with the axis Z-Z of the cover 2 and the chamber 1, and at least three flow deviator vanes 11 reversibly mounted on the ring so that the distributor assumes a "crown-like form".

Each vane 11 has a vertical laminar body with an inner edge 11a directed towards the central axis Z-Z and an outer edge 11b opposite to the inner edge and with lateral faces 11c extending between said inner and outer edges and arranged opposite each other in a direction of thickness of the vane 11.

The laminar body has an upper wing 12 and a bottom leg 13. An incision 11d extends from the inner edge of the upper wing 12 towards the outer edge of the upper wing.

The ring 16 has in turn a plurality of slits 16a, preferably with a rectangular cross-section, in different angular positions. A respective incision 11d of a respective vane of the deviator vanes 11 is inserted inside each of the slits 16a so as to join together in an interlocking manner, stably and reversibly, the vane 11 and the ring 16.

As can be seen, once mounted on the ring 16, the upper wings 12 of the vanes 11 project radially outwards from the outer edge 16e of the ring. The bottom legs 13 of the vanes project downwards, preferably in a direction converging towards the axis of the ring, forming the so-called "crown" system.

The slits 16a may extend from the outer side 16e of the ring towards the central axis. The directrix of the slit may also not pass through the centre of the ring. The slit may have a semi-circular vertical section.

The bottom legs 13 of the laminar body of the at least three flow deviator vanes 11 have an outer edge configured to rest on the inner bottom surface 23 of the distribution compartment 20 so that, during use, said bottom legs 13 form, together, a support structure on the bottom inner surface 23 of the compartment, for stably supporting the crown inside the distribution compartment 20.

The deviator vanes 11 may consist for example of metal plates with a thickness preferably of between 1 and 3 mm (obtained for example by means of laser cutting).

The bottom leg 13 may be in the form a tapered whisker which extends towards the axis of the containment ring, said leg having preferably a triangular or trapezoidal pointed shape so that the outer leg of the leg corresponds to the profile of the inclined walls 23 of the frustoconical bottom funnel of the central volume of the cover, on which they rest once the dryer is assembled.

More generally, the outer edges of the bottom legs 13 of the vanes form overall a set of support lines on the inner side surface 23 of the bottom funnel of the cover 2, so that the crown is able to be self-supporting inside the distribution compartment.

In preferred embodiments (Fig. 9A), the upper wing 12 of one or more vanes 11 may have a radially inner portion and a radially outer portion which is folded around a vertical axis with respect to the inner portion, preferably at an angle of between 5° and 60°, so as to offer the least resistance to the incoming air flow. In further preferred embodiments (Fig. 9b), the profile of the entire deviator vane 11 may be curved or curvilinear with a predefined radius of curvature in the horizontal plane perpendicular to the axis Z-Z or may have a double curvature: in the horizontal plane perpendicular to the axis Z-Z and in the vertical plane perpendicular to the axis Y-Y.

The wing 12 has preferably a polygonal, for example rectangular trapezium shape.

The assembly consisting of the ring 16 and the control vanes 11 is therefore designed such that the vanes may firmly engage in the containment ring and the crown structure may be self-supporting inside the distribution compartment 20 of the cover 2, as shown more clearly in Figure 6. According to a further aspect, the containment ring may also be composed of two half-rings which are assembled together, instead of being made as one piece.

The containment ring may have a circular or rectangular cross-section and preferably have a radial dimension greater than the thickness.

The ring 16 may be a flat ring (Fig. 4) or preferably in the form of a truncated cone (Fig. 7) with an inclination of the inner and outer side surfaces ranging between 5° and 95°, this helping deviate the gas flow and reducing the vortices which form along the flow axis.

The flat ring has an asymmetrical form designed to prevent undesirable rotation thereof.

According to a preferred embodiment of the present invention, shown in Fig. 7, the containment ring 116 has a frustoconical shape and an inclination of the outer side surface corresponding to that of the tapered bottom surface of the distribution compartment 20.

With reference to Fig. 7, in the case of frustoconical rings 116, the slits 116a of the ring 116 may be provided with projecting tongues 116b inclined with respect to the side surfaces of the ring 116.

With reference to Figs. 8a, 8b, for engagement with a frustoconical ring 116, the incisions 11a of the vanes 111 have preferably a segment 111b inclined with respect to the horizontal plane perpendicular to the axis of the ring.

In greater detail, the incision 111a may have (Fig. 8a) a first wider segment 111c extending from an outer edge towards the inside of the wing 12, for example in a substantially horizontal direction, connected to said inclined segment 111b. In alternative embodiments (Fig. 8b), the incision has a first wider segment extending from the outer edge of the leg 13 towards the wing 12 and connected to an inclined smaller-width segment 111b.

The larger-width segment 111b allows the insertion of the vane 111 on the ring 116 with a degree of freedom for relative rotation and the engagement of the tongue 116b in the inclined segment of the incision 111a. Advantageously, by suitably choosing the configuration of the containment ring and the control vanes 11 it is possible to direct and make as uniform as possible the drying gas flows output from the distribution compartment 20, in accordance with the design requirements and the type of production required. As can be seen in Figs. 9a, 9b, depending on the form and inclination or curvature of the vanes, it is possible to obtain outgoing vertical axial flows with different turbulence characteristics, visible in the comparison between the low velocity flow zones (darker coloured in the figures).

Upon variation of the specifications required, it is sufficient to replace the entire crown distributor or one or more vanes thereof in order to change the distribution of the gas flow entering the drying chamber, accessing the distribution chamber by means of a few simple operations involving opening and removal of the cover.

In preferred embodiments, some or all the vanes arranged along the ring have a gradually increasing area of the side surfaces (which act so as to deviate the flow), with the largest area vane being preferably arranged in the last angular position so that the distance from the inner side wall of the gas inlet duct 21 is minimal. This is advantageous because it allows a deviation and distribution of the efficient air with a uniform speed of entry from the distribution compartment 20 into the drying chamber 1.

According to a further aspect, one or more additional containment rings may be coaxially inserted in the crown system by adding respective one or more additional incisions to each deviator vane 11. This configuration allows further control of the air flows.

According to a further aspect, the first containment ring or the additional rings may be made of porous material or be formed by a metal grille (with rectangular or circular holes), which allows further control of the flows and reduction of the head losses.

It will be within the competence of the person skilled in the art to incorporate in a spray dryer the different embodiments of the crown distributor, by varying the inclination of the control vanes or the walls of the containment ring or the number of deviator vanes, as well as all the other possible geometrical features of the vanes indicated above.

It is therefore clear how the distributor according to the present invention may be removed in order to clean it or vary the mode of distribution of the drying gas and allows easy configuration of the drying chamber cover, thus resulting in the formation of a distribution unit which may be opened, disassembled and/or modified according to the installation, maintenance or different configurational requirements.

In addition to this, further advantages are provided by the particular configuration:
- of the outer edge of the deviator vanes which during use form as a whole a support structure for stably supporting the crown inside the distribution compartment which becomes self-supporting;
- of the frustoconical ring which helps reduce the vortices which form along the flow axis.

Although described in connection with a number of embodiments and a number of preferred examples of implementation of the invention, it is understood that the scope of protection of the present patent is determined solely by the claims below.

## Claims

1. Flow distributor configured to be arranged between a drying gas inlet (21) and a drying gas outlet (22) of a gas flow distribution compartment (20) for a spray dryer in order to deviate the drying gas flow between the inlet and the outlet of the distribution compartment, wherein the distributor is in the form of a crown (10) comprising:
- a containment ring (116) with a central axis (Z-Z);
- at least three flow deviator vanes (111) reversibly mounted on the ring in different angular positions;
**characterized in that**
the ring (116) has an asymmetrical or frustoconical flat form, with a plurality of slits (116a) configured for interlocking engagement with a respective vane (111), a projecting tongue (116b) being formed inside one or more of said slits (116a) of the frustoconical ring and.
**in that** each of the at least three deviator vanes (111) is formed by a laminar body which has an upper wing (12), a bottom leg (13) which projects downwards from the ring (116), and an incision (111a) which allows stable and reversible engagement of the deviator vane (111) and the ring (116);
and wherein said bottom legs (13) of the laminar body of the at least three flow deviator vanes (111) have an outer edge configured to rest on an inner bottom surface (23) of the distribution compartment (20) so that, during use, said bottom legs form together a support structure on the bottom inner surface (23) of the distribution compartment for stable self-supporting of the crown inside the distribution compartment.

2. Distributor according to the preceding claim, wherein the legs (13) are configured to support the crown-like distributor on a tapered, in particular frustoconical, bottom surface (23) of a bottom funnel for conveying the gas of the distribution compartment.

3. Distributor according to one of the preceding claims, wherein said laminar body of the vanes (111) has an inner edge (111a) directed towards the central axis and an outer edge (111b) opposite to the inner edge and lateral faces extending between said inner edge and outer edge and arranged opposite each other in a direction of thickness of the vane.

4. Distributor according to the preceding claim, wherein the incision in the vane extends from the inner edge or outer edge of the laminar body towards the inside of the upper wing (12).

5. Distributor according to one of the preceding claims, wherein the incision in the vane (111) comprises a wider segment and a less wide segment and/or a segment inclined with respect to a horizontal plane perpendicular to the axis of the ring (116).

6. Distributor according to one of the preceding claims, wherein the ring is formed by two parts coupled together.

7. Distributor according to one of the preceding claims, wherein the upper wing (12) of one or more vanes (111) has a radially inner portion and a radially outer portion, and
- the radially outer portion is bent about a vertical axis with respect to the inner portion, preferably at an angle of between 5° and 60°; or
- the profile of the entire laminar body of one or more deviator vanes (111) is curved with a predefined radius of curvature in the horizontal plane perpendicular to the axis of the ring,
both being configured to determine different turbulence characteristics.

8. Distributor according to one of the preceding claims, wherein the wing (12) has a polygonal, preferably rectangular trapezium shape; and/or wherein the bottom leg (13) is in the form a whisker tapered downwards and towards the axis of the ring.

9. Distributor according to one of the preceding claims, wherein a plurality of said vanes (111) arranged in sequence along the angular extension of the ring (116) has a lateral surface area which increases progressively between one vane and the next one along the angular extension of the ring.

10. Distributor according to one of the preceding claims, further comprising an additional ring, coaxial with the containment ring and stably and reversibly engaged with said vanes, said additional ring being preferably formed by a metal grille and/or having outer sides parallel to the axis of the containment ring.

11. Distributor according to one of the preceding claims, wherein the containment ring is formed by a metal grille.

12. Spray dryer comprising a drying chamber (1) closed at the top by a cover (2) which defines an internal volume of the cover, communicating with the drying chamber (1) by means of a bottom hole and with the outside by means of an upper hole, said holes being arranged coaxially along a vertical central axis (Z-Z);
wherein a partition (3) is coaxially inserted inside the internal volume of the cover (2) and divides up the internal volume, forming a coaxial central compartment and a distribution compartment for distributing a drying gas;
wherein the coaxial central compartment houses a nozzle unit (4) with at least one nozzle (4a) arranged so as to dispense fluid droplets inside the drying chamber at the bottom hole of the cover;
wherein the distribution compartment is designed to distribute a drying gas flow and is configured to receive drying gas from an inlet opening via a tangential duct (21) and to channel it towards a bottom drying gas outlet (22) which surrounds the at least one nozzle (4a);
wherein a bottom surface (23) of the distribution compartment (20) is formed as a coaxial funnel for conveying the gas flow to the bottom outlet;
and wherein a flow distributor (10) formed as a crown according to one of the preceding claims is coaxially housed inside the distribution compartment (20) and configured to deviate the drying gas flow between the inlet and the outlet for the drying gas of the distribution compartment (20), the bottom legs (13) of the flow distributor (110) being arranged so as to rest on the bottom funnel-shaped surface (23) of the distribution compartment so that the distributor is stably self-supporting inside the distribution compartment.

13. Spray dryer according to the preceding claim, wherein the bottom funnel-shaped surface of the distribution compartment is a downwardly tapered surface, in particular a frustoconical surface.

## Patentansprüche

1. Strömungsverteiler, der dazu ausgebildet ist, um zwischen einem Trocknungsgaseinlass (21) und einem Trocknungsgasauslass (22) einer Gasströmungsverteilungskammer (20) für einen Sprühtrockner angeordnet zu werden, um die Trocknungsgasströmung zwischen dem Einlass und dem Auslass der Verteilungskammer umzulenken, wobei der Verteiler in Form einer Krone (10) vorliegt, umfassend:
- einen Begrenzungsring (116) mit einer Mittelachse (Z-Z);
- mindestens drei Strömungsumlenkschaufeln (111), die reversibel an dem Ring in verschiedenen Winkelpositionen montiert sind;
**dadurch gekennzeichnet, dass**
der Ring (116) eine asymmetrische oder kegelstumpfförmige flache Form mit einer Vielzahl von Schlitzen (116a) aufweist, die zum ineinandergreifenden Eingriff mit einer jeweiligen Schaufel (111) ausgebildet sind, wobei eine vorstehende Zunge (116b) innerhalb eines oder mehrerer der Schlitze (116a) des kegelstumpfförmigen Rings ausgebildet ist, und
dadurch, dass jede der mindestens drei Umlenkschaufeln (111) durch einen laminaren Körper gebildet ist, der einen oberen Flügel (12), einen unteren Schenkel (13), der von dem Ring (116) nach unten vorsteht, und einen Einschnitt (111a) aufweist, der einen stabilen und reversiblen Eingriff der Umlenkschaufel (111) und des Rings (116) ermöglicht;
und wobei die unteren Schenkel (13) des laminaren Körpers der mindestens drei Strömungsumlenkschaufeln (111) eine Außenkante aufweisen, die dazu ausgebildet ist, um auf einer inneren unteren Oberfläche (23) der Verteilungskammer (20) zu ruhen, sodass während des Gebrauchs die unteren Schenkel zusammen eine Stützstruktur auf der unteren inneren Oberfläche (23) der Verteilungskammer zum stabilen Selbststützen der Krone innerhalb der Verteilungskammer bilden.

2. Verteiler nach dem vorhergehenden Anspruch, wobei die Schenkel (13) dazu ausgebildet sind, um den kronenartigen Verteiler auf einer verjüngten, insbesondere kegelstumpfförmigen, unteren Oberfläche (23) eines unteren Trichters zum Befördern des Gases der Verteilungskammer zu stützen.

3. Verteiler nach einem der vorhergehenden Ansprüche, wobei der laminare Körper der Schaufeln (111) eine Innenkante (111a), die zu der Mittelachse gerichtet ist, und eine Außenkante (111b) gegenüber der Innenkante und Seitenflächen aufweist, die sich zwischen der Innenkante und der Außenkante erstrecken und einander gegenüber in einer Dickenrichtung der Schaufel angeordnet sind.

4. Verteiler nach dem vorhergehenden Anspruch, wobei sich der Einschnitt in der Schaufel von der Innenkante oder Außenkante des laminaren Körpers zu der Innenseite des oberen Flügels (12) erstreckt.

5. Verteiler nach einem der vorhergehenden Ansprüche, wobei der Einschnitt in der Schaufel (111) ein breiteres Segment und ein weniger breites Segment und/oder ein Segment umfasst, das in Bezug auf eine horizontale Ebene senkrecht zu der Achse des Rings (116) geneigt ist.

6. Verteiler nach einem der vorhergehenden Ansprüche, wobei der Ring durch zwei miteinander gekoppelte Teile gebildet ist.

7. Verteiler nach einem der vorhergehenden Ansprüche, wobei der obere Flügel (12) einer oder mehrerer Schaufeln (111) einen radial inneren Abschnitt und einen radial äußeren Abschnitt aufweist, und
- der radial äußere Abschnitt um eine vertikale Achse in Bezug auf den inneren Abschnitt, vorzugsweise in einem Winkel zwischen 5° und 60°, gebogen ist; oder
- das Profil des gesamten laminaren Körpers einer oder mehrerer Umlenkschaufeln (111) mit einem vordefinierten Krümmungsradius in der horizontalen Ebene senkrecht zu der Achse des Rings gekrümmt ist, wobei beide dazu ausgebildet sind, um verschiedene Turbulenzeigenschaften zu bestimmen.

8. Verteiler nach einem der vorhergehenden Ansprüche, wobei der Flügel (12) eine polygonale, vorzugsweise rechteckige Trapezform aufweist; und/oder wobei der untere Schenkel (13) die Form eines Whiskers aufweist, der sich nach unten und zu der Achse des Rings verjüngt.

9. Verteiler nach einem der vorhergehenden Ansprüche, wobei eine Vielzahl der Schaufeln (111), die der Reihe nach entlang der Winkelerstreckung des Rings (116) angeordnet sind, eine seitliche Oberfläche aufweist, die zwischen einer Schaufel und der nächsten entlang der Winkelerstreckung des Rings progressiv zunimmt.

10. Verteiler nach einem der vorhergehenden Ansprüche, ferner umfassend einen zusätzlichen Ring, der koaxial zu dem Begrenzungsring ist und stabil und reversibel mit den Schaufeln in Eingriff steht, wobei der zusätzliche Ring vorzugsweise durch ein Metallgitter gebildet ist und/oder Außenseiten parallel zu der Achse des Begrenzungsrings aufweist.

11. Verteiler nach einem der vorhergehenden Ansprüche, wobei der Begrenzungsring durch ein Metallgitter gebildet ist.

12. Sprühtrockner, umfassend eine Trocknungskammer (1), die oben durch eine Abdeckung (2) verschlossen ist, die ein Innenvolumen der Abdeckung definiert, die mit der Trocknungskammer (1) mittels eines unteren Lochs und mit der Außenseite mittels eines oberen Lochs in Verbindung steht, wobei die Löcher koaxial entlang einer vertikalen Mittelachse (Z-Z) angeordnet sind;
wobei eine Trennwand (3) koaxial in das Innenvolumen der Abdeckung (2) eingesetzt ist und das Innenvolumen unterteilt, wobei sie eine koaxiale zentrale Kammer und eine Verteilungskammer zum Verteilen eines Trocknungsgases bildet;
wobei die koaxiale zentrale Kammer eine Düseneinheit (4) mit mindestens einer Düse (4a) aufnimmt, die angeordnet ist, um Fluidtröpfchen im Inneren der Trocknungskammer am unteren Loch der Abdeckung abzugeben;
wobei die Verteilungskammer ausgelegt ist, um eine Trocknungsgasströmung zu verteilen, und dazu ausgebildet ist, um Trocknungsgas von einer Einlassöffnung über einen tangentialen Kanal (21) aufzunehmen und es zu einem unteren Trocknungsgasauslass (22) zu kanalisieren, der die mindestens eine Düse (4a) umgibt;
wobei eine untere Oberfläche (23) der Verteilungskammer (20) als koaxialer Trichter zum Befördern der Gasströmung zum unteren Auslass ausgebildet ist;
und wobei ein Strömungsverteiler (10), der als Krone nach einem der vorhergehenden Ansprüche ausgebildet ist, koaxial im Inneren der Verteilungskammer (20) aufgenommen ist und dazu ausgebildet ist, um die Trocknungsgasströmung zwischen dem Einlass und dem Auslass für das Trocknungsgas der Verteilungskammer (20) umzulenken, wobei die unteren Schenkel (13) des Strömungsverteilers (10) angeordnet sind, um auf der unteren trichterförmigen Oberfläche (23) der Verteilungskammer zu ruhen, so dass der Verteiler im Inneren der Verteilungskammer stabil selbsttragend ist.

13. Sprühtrockner nach dem vorhergehenden Anspruch, wobei die untere trichterförmige Oberfläche der Verteilungskammer eine sich nach unten verjüngende Oberfläche, insbesondere eine kegelstumpfförmige Oberfläche, ist.

## Revendications

1. Distributeur d'écoulement configuré pour être disposé entre une entrée de gaz de séchage (21) et une sortie de gaz de séchage (22) d'un compartiment de distribution d'écoulement de gaz (20) pour un séchoir à pulvérisation afin de dévier l'écoulement de gaz de séchage entre l'entrée et la sortie du compartiment de distribution, dans lequel le distributeur se présente sous la forme d'une couronne (10) comprenant :
- une bague de confinement (116) avec un axe central (Z-Z);
- au moins trois aubes de déviation d'écoulement (11) montées de manière réversible sur la bague dans des positions angulaires différentes; **caractérisé en ce que** la bague (116) a une forme plate asymétrique ou tronconique, avec une pluralité de fentes (116a) configurées pour une mise en prise de verrouillage avec une aube respective (111), une languette en saillie (116b) étant formée à l'intérieur d'une ou plusieurs desdites fentes (116a) de la bague tronconique, et.
**en ce que** chacune des au moins trois aubes de déviation (111) est formée par un corps laminaire qui a une aile supérieure (12), une patte inférieure (13) qui fait saillie vers le bas à partir de la bague (116), et une incision (111a) qui permet une mise en prise stable et réversible de l'aube de déviation (111) et de la bague (116);
et dans lequel lesdites pattes inférieures (13) du corps laminaire des au moins trois aubes de déviation d'écoulement (111) ont un bord externe configuré pour reposer sur une surface inférieure interne (23) du compartiment de distribution (20) de sorte que, pendant l'utilisation, lesdites pattes inférieures forment ensemble une structure de support sur la surface interne inférieure (23) du compartiment de distribution pour un auto-support stable de la couronne à l'intérieur du compartiment de distribution.

2. Distributeur selon la revendication précédente, dans lequel les pattes (13) sont configurées pour supporter le distributeur en forme de couronne sur une surface inférieure conique, en particulier tronconique (23) d'un entonnoir inférieur pour transporter le gaz du compartiment de distribution.

3. Distributeur selon l'une des revendications précédentes, dans lequel ledit corps laminaire des aubes (111) a un bord interne (111a) dirigé vers l'axe central et un bord externe (111b) opposé au bord interne et des faces latérales s'étendant entre ledit bord interne et ledit bord externe et agencées à l'opposé l'une de l'autre dans une direction d'épaisseur de l'aube.

4. Distributeur selon la revendication précédente, dans lequel l'incision dans l'aube s'étend depuis le bord intérieur ou le bord extérieur du corps laminaire vers l'intérieur de l'aile supérieure (12).

5. Distributeur selon l'une des revendications précédentes, dans lequel l'incision dans l'aube (111) comprend un segment plus large et/ou un segment moins large et/ou un segment incliné par rapport à un plan horizontal perpendiculaire à l'axe de la bague (116).

6. Distributeur selon l'une des revendications précédentes, dans lequel la bague est formée par deux parties couplées l'une à l'autre.

7. Distributeur selon l'une des revendications précédentes, dans lequel l'aile supérieure (12) d'une ou plusieurs aubes (111) a une partie radialement interne et une partie radialement externe, et
- la partie radialement extérieure est pliée autour d'un axe vertical par rapport à la partie intérieure, de préférence à un angle compris entre 5° et 60°; ou
- le profil de l'ensemble du corps laminaire d'une ou plusieurs aubes de déviation (111) est incurvé avec un rayon de courbure prédéfini dans le plan horizontal perpendiculaire à l'axe de la bague,
les deux étant configurées pour déterminer différentes caractéristiques de turbulence.

8. Distributeur selon l'une des revendications précédentes, dans lequel l'aile (12) a une forme polygonale, de préférence de trapèze rectangle; et/ou dans lequel la jambe inférieure (13) est sous la forme d'une protubérance effilée vers le bas et vers l'axe de la bague.

9. Distributeur selon l'une des revendications précédentes, dans lequel une pluralité desdites aubes (111) agencées en séquence le long de l'extension angulaire de la bague (116) a une surface latérale qui augmente progressivement entre une aube et la suivante le long de l'extension angulaire de la bague.

10. Distributeur selon l'une des revendications précédentes, comprenant en outre une bague supplémentaire, coaxiale avec la bague de confinement et en prise de manière stable et réversible avec lesdites aubes, ladite bague supplémentaire étant de préférence formée par une grille métallique et/ou ayant des côtés externes parallèles à l'axe de la bague de confinement.

11. Distributeur selon l'une des revendications précédentes, dans lequel la bague de confinement est formée par une grille métallique.

12. Séchoir à pulvérisation comprenant une chambre de séchage (1) fermée en haut par un couvercle (2) qui définit un volume interne du couvercle, communiquant avec la chambre de séchage (1) au moyen d'un trou inférieur et avec l'extérieur au moyen d'un trou supérieur, lesdits trous étant agencés de manière coaxiale le long d'un axe central vertical (Z-Z); dans lequel une cloison (3) est insérée de manière coaxiale à l'intérieur du volume interne du couvercle (2) et divise le volume interne, formant un compartiment central coaxial et un compartiment de distribution pour distribuer un gaz de séchage; dans lequel le compartiment central coaxial loge une unité de buse (4) avec au moins une buse (4a) agencée de manière à distribuer des gouttelettes de fluide à l'intérieur de la chambre de séchage au niveau du trou inférieur du couvercle; dans lequel le compartiment de distribution est conçu pour distribuer un flux de gaz de séchage et est configuré pour recevoir un gaz de séchage à partir d'une ouverture d'entrée par l'intermédiaire d'un conduit tangentiel (21) et pour le canaliser vers une sortie de gaz de séchage inférieure (22) qui entoure l'au moins une buse (4a); dans lequel une surface inférieure (23) du compartiment de distribution (20) est formée comme un entonnoir coaxial pour transporter le flux de gaz vers la sortie inférieure;
et dans lequel un distributeur d'écoulement (10) formé sous la forme d'une couronne selon l'une des revendications précédentes est logé de manière coaxiale à l'intérieur du compartiment de distribution (20) et configuré pour dévier l'écoulement de gaz de séchage entre l'entrée et la sortie pour le gaz de séchage du compartiment de distribution (20), les pattes inférieures (13) du distributeur d'écoulement (10) étant agencées de manière à reposer sur la surface inférieure en forme d'entonnoir (23) du compartiment de distribution de sorte que le distributeur soit auto supporté de manière stable à l'intérieur du compartiment de distribution.

13. Séchoir à pulvérisation selon la revendication précédente, dans lequel la surface inférieure en forme d'entonnoir du compartiment de distribution est une surface effilée vers le bas, en particulier une surface tronconique.
